# EUROPÄISCHE PATENTANMELDUNG

(11) **EP 4 435 382 A1**
(43) Veröffentlichungstag der Anmeldung: **25.09.2024**
(21) Anmeldenummer: 24152308.3
(22) Anmeldetag: 17.01.2024
(51) Int. Cl.: G01D 3/08, G01D 18/00, G01D 21/00, G01N 25/00, G05B 19/418, G05B 23/00

(54) **VERFAHREN ZUR STEUERUNG EINER MESSVORRICHTUNG UND MESSVORRICHTUNG**

(30) Priorität: 21.03.2023 DE 102023107046; 21.03.2023 US 202363453486 P
(71) Anmelder: Netzsch Gerätebau GmbH, 95100 Selb (DE)
(72) Erfinder: BRUNNER, Martin, 95176 Konradsreuth (DE); DENNER, Thomas, 95100 Selb (DE); HILPERT, Thilo, 95100 Selb (DE); WOHLFAHRT, Fabian, 95111 Rehau (DE); SCHÖNEICH, Michael, 95100 Selb (DE); MÜLLER, Michael, 92724 Trabitz (DE); HACHMANN, Thorsten, 95199 Thierstein (DE)
(74) Vertreter: Isarpatent

(57) **Zusammenfassung**

Die vorliegende Erfindung schafft ein Verfahren zur Steuerung einer Messvorrichtung (100) mit folgenden Verfahrensschritten: Auswählen einer zu untersuchenden Probe, Herstellen von Bedingungen, unter welchen die Probe untersucht werden soll, durch die Messvorrichtung (100), und Erstellen von Messwerten bezüglich Eigenschaften der Probe, wobei die Verfahrensschritte von einer Steuereinrichtung (110) autonom gesteuert werden. Ferner schafft die vorliegende Erfindung eine Messvorrichtung, die das vorstehend genannte Verfahren durchführen kann.

## Beschreibung

### TECHNISCHES GEBIET DER ERFINDUNG

Die vorliegende Erfindung betrifft ein Verfahren zur Steuerung einer Messvorrichtung sowie eine Messvorrichtung.

### HINTERGRUND DER ERFINDUNG

Das Bestimmen von Eigenschaften verschiedener Materialien ist für viele Anwendungen in Forschung und Industrie von großer Bedeutung. Hierfür werden vielfältige Messvorrichtungen verwendet, welche je nach Anwendungsbereich mitunter sehr komplexe Messvorgänge ermöglichen.

Um diese Messungen durchzuführen ist von einem Benutzer eine gewisse Expertise gefordert, da die technischen und wissenschaftlichen Hintergründe der einzelnen Messvorgänge berücksichtigt werden müssen, um eine erfolgreiche Durchführung der gewünschten Messung sicherstellen zu können. Des Weiteren werden Messvorrichtungen in den meisten Laborumgebungen von mehreren Benutzern verwendet, bzw. für eine Reihe von direkt aufeinanderfolgenden Messungen verwendet.

Dies macht es erforderlich, im Vorhinein zu planen, welche Messungen durchgeführt werden sollen, da zwischen verschiedenen Messungen eventuell die Messvorrichtung neu eingestellt werden muss. Falls bei einer Messung unvorhergesehene Ereignisse auftreten, kann es mitunter aufwändig sein, den vorbestimmten Plan zu ändern, um etwa Messungen zu wiederholen oder neue Messungen einzuplanen. Insbesondere, wenn keine Benutzer persönlich vor Ort sind, beispielsweise nachts, kann die Effizienz der Auslastung der einzelnen Messvorrichtungen hierdurch beeinträchtigt werden.

### ZUSAMMENFASSUNG DER ERFINDUNG

Vor diesem Hintergrund liegt der vorliegenden Erfindung die Aufgabe zugrunde, die Verwendung von Messvorrichtungen effizienter zu gestalten.

Diese Aufgabe wird gelöst durch ein Verfahren mit den Merkmalen des Patentanspruchs 1 sowie durch eine Messvorrichtung mit den Merkmalen des Patentanspruchs 9.

Dementsprechend ist ein Verfahren zur Steuerung einer Messvorrichtung vorgesehen. Das Verfahren umfasst ein Auswählen einer zu untersuchenden Probe, ein Herstellen von Bedingungen, unter welchen die Probe untersucht werden soll, durch die Messvorrichtung, und ein Erstellen von Messwerten bezüglich Eigenschaften der Probe. Die Verfahrensschritte werden hierbei von einer Steuereinrichtung autonom gesteuert.

Des Weiteren ist eine Messvorrichtung vorgesehen, welche dazu ausgebildet ist, das erfindungsgemäße Verfahren durchzuführen.

Eine der Erfindung zugrunde liegende Idee besteht darin, eine Messvorrichtung durch eine autonome Steuerung mittels einer Steuereinrichtung möglichst zu automatisieren. Hierdurch werden Benutzer der Messvorrichtung vorteilhaft entlastet, da weniger Schritte des Messvorgangs persönlich vorbereitet bzw. durchgeführt werden. Auch eine Erhöhung der Effizienz der Messvorrichtung zu Zeiten, wenn kein Benutzer persönlich vor Ort ist, ist mit der vorliegenden Erfindung möglich.

Gemäß eines Ausführungsbeispiels des Verfahrens wählt die Steuereinrichtung autonom die zu untersuchende Probe aus. Hierdurch werden Benutzer der Messvorrichtung vorteilhaft weiter entlastet. Insbesondere kann die Messvorrichtung hierdurch auch Messungen durchführen, ohne dass ein Benutzer persönlich vor Ort ist.

Gemäß einer Weiterbildung des Verfahrens wählt die Steuereinrichtung die zu untersuchende Probe auf Basis von zu einem früheren Zeitpunkt durch die Messvorrichtung hergestellten Bedingungen aus. Hierdurch kann beispielsweise die Effizienz der Messvorrichtung erhöht werden, indem Proben, welche unter identischen oder ähnlichen Bedingungen untersucht werden, aufeinanderfolgend untersucht werden.

Gemäß einer Weiterbildung des Verfahrens wählt die Steuereinrichtung die zu untersuchende Probe auf Basis von zu einem früheren Zeitpunkt durch die Messvorrichtung erstellten Messwerten aus. Hierdurch kann die Messvorrichtung vorteilhaft auf die Ergebnisse einzelner Messungen reagieren.

Gemäß eines Ausführungsbeispiels umfasst das Verfahren weiterhin ein Wiederholen des Erstellens der Messwerte, wenn die Steuereinrichtung erkennt, dass die erstellten Messwerte außerhalb eines plausiblen Bereichs liegen. Hierdurch können fehlerhaft erscheinende Messungen vorteilhaft ausgeglichen werden, ohne eine zusätzliche Belastung für einen Benutzer zu erzeugen.

Gemäß eines Ausführungsbeispiels des Verfahrens greift die Steuereinrichtung auf eine Datenbank zurück. Durch eine geeignete Ausgestaltung der Datenbank kann die Steuerung der Messvorrichtung vorteilhaft unterstützt werden.

Gemäß einer Weiterbildung des Verfahrens beinhaltet die Datenbank eine Vielzahl an Informationen über Materialeigenschaften und Messmethoden, wobei die Steuereinrichtung basierend auf dieser Vielzahl an Informationen autonom die Messvorrichtung steuert. Hierdurch kann die Steuereinrichtung vorteilhaft eine Vielzahl von hypothetisch möglichen Messungen unterstützen.

Gemäß eines Ausführungsbeispiels des Verfahrens aktualisiert die Steuereinrichtung die Datenbank nach dem Erstellen der Messwerte. Hierdurch können bei einer Messung gewonnene Erkenntnisse vorteilhaft für zukünftige Messungen genutzt werden.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: ein schematisches Flussdiagramm für ein Verfahren nach einem Ausführungsbeispiel der vorliegenden Erfindung;
- Fig. 2: eine schematische Darstellung einer Messvorrichtung nach einem Ausführungsbeispiel der vorliegenden Erfindung; und
- Fig. 3: eine schematische Darstellung eines Systems mit einer Vielzahl an Messvorrichtungen nach einem Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

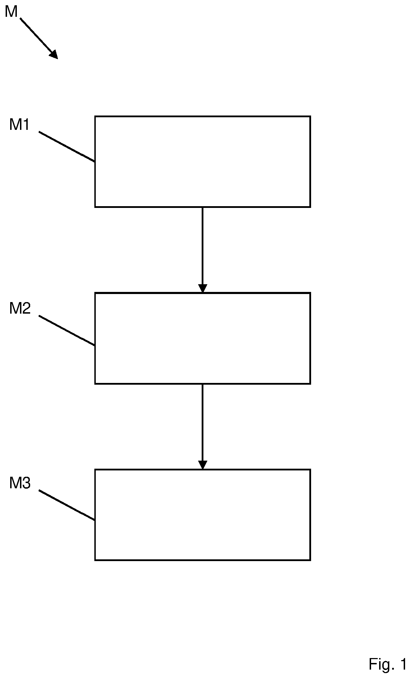

Fig. 1 zeigt ein schematisches Flussdiagramm für ein Verfahren M zum Steuern einer Messvorrichtung nach einem Ausführungsbeispiel der vorliegenden Erfindung.

In einem ersten Verfahrensschritt M1 wird eine zu untersuchende Probe ausgewählt. In einem weiteren Verfahrensschritt M2 werden Bedingungen, unter welchen die Probe untersucht werden soll, durch die Messvorrichtung hergestellt. In einem weiteren Verfahrensschritt M3 werden Messwerte bezüglich Eigenschaften der Probe erstellt. Die Verfahrensschritte werden hierbei von einer Steuereinrichtung autonom gesteuert.

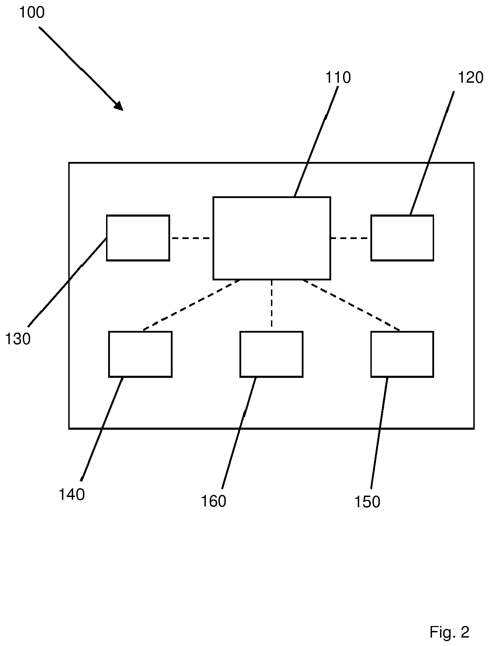

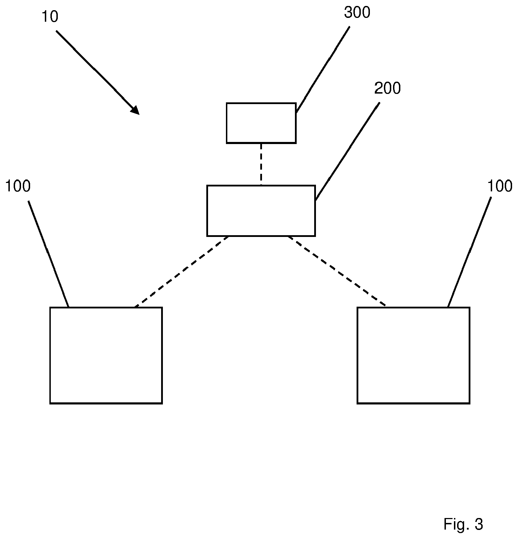

Das gezeigte Verfahren M wird im Nachfolgenden mit Bezug auf die Figuren 2 und 3 im Detail beschrieben.

Fig. 2 zeigt eine schematische Darstellung einer Messvorrichtung 100 nach einem Ausführungsbeispiel der vorliegenden Erfindung.

Die Messvorrichtung 100 weist eine Steuereinrichtung 110, eine Datenbank 120, eine Sensoreinrichtung 130, eine Ausgabeeinrichtung 140, eine Eingabeeinrichtung 150, und eine Probenaufnahmeeinrichtung 160 auf.

Die Steuereinrichtung 110 ist in dem hier gezeigten Ausführungsbeispiel in die Messvorrichtung 100 integriert und kann dazu ausgebildet sein, eine zu untersuchende Probe autonom auszuwählen. Hierfür können sowohl zu einem früheren Zeitpunkt durch die Messvorrichtung 100 hergestellte Bedingungen als auch zu einem früheren Zeitpunkt durch die Messvorrichtung 100 erstellte Messwerten berücksichtigt werden. Falls die für die Untersuchung einer Probe notwendigen Bedingungen beispielsweise auch für die Untersuchung einer weiteren Probe notwendig sind, kann es vorteilhaft sein, diese beiden Proben in aufeinanderfolgenden Messungen zu untersuchen, da hierdurch die Auslastung der Messvorrichtung 100 effizienter gestaltet werden kann.

Alternativ oder zusätzlich kann die zu untersuchende Probe auch von einem Benutzer der Messvorrichtung 100 ausgewählt werden, welcher diese Auswahl an die Steuereinrichtung 110 übergibt. Diese Auswahl kann von dem Benutzer der Messvorrichtung 100 beispielsweise über die Eingabeeinrichtung 150 der Messvorrichtung 100 an die Steuereinrichtung 110 übergeben werden. Die Eingabeeinrichtung 150 kann hierfür beispielsweise eine Tastatur, einen Touchscreen oder ähnliches umfassen. Alternativ kann die Auswahl auch über eine externe Schnittstelle an die Steuereinrichtung 110 übertragen werden.

Die Messvorrichtung 100 ist weiterhin dazu ausgebildet, Bedingungen, unter welchen die Probe untersucht werden soll, herzustellen. Insbesondere wird dies autonom durch die Steuereinrichtung 110 gesteuert. Hierfür kann insbesondere die Probenaufnahmeeinrichtung 160 entsprechend ausgebildet sein und beispielsweise Komponenten wie Temperaturregler, Spannungsquellen, Greifarme, Förderbänder oder dergleichen aufweisen.

Die Messvorrichtung 100 ist weiterhin dazu ausgebildet, Messwerte bezüglich Eigenschaften der Probe zu erstellen. Hierfür kann die Sensoreinrichtung 130 verwendet werden, welche die entsprechenden Sensoren, wie beispielsweise Temperaturmessgeräte, Strommessgeräte, Spannungsmessgeräte, Kraftmessgeräte oder dergleichen aufweisen kann. Diese Sensoren oder die Sensoreinrichtung 130 können/kann auch als Unterkomponente/n der Probenaufnahmeeinrichtung 160 ausgebildet sein.

Die Messvorrichtung 100, insbesondere die Steuereinrichtung 110, kann auch dazu ausgebildet sein, das Erstellen der Messwerte zu wiederholen, wenn die Steuereinrichtung 110 erkennt, dass die erstellten Messwerte außerhalb eines plausiblen Bereichs liegen. Hierdurch kann die Messvorrichtung 100 erkennen, dass eine Messung möglicherweise nicht korrekt durchgeführt wurde und diese wiederholen, um diese Möglichkeit zu bestätigen oder korrekte Messwerte erstellen zu können.

Die Steuereinrichtung 110 kann dazu ausgebildet sein, für die Steuerung der Messvorrichtung 100 auf die Datenbank 120 zurückzugreifen, welche im vorliegenden Ausführungsbeispiel in Form eines internen Speichers der Messvorrichtung 100 ausgebildet ist. Die Datenbank 120 kann hierbei eine Vielzahl an Informationen über Materialeigenschaften und Messmethoden beinhalten. In diesem Fall steuert die Steuereinrichtung 110 die Messvorrichtung 100 autonom basierend auf dieser Vielzahl an Informationen.

Die Messvorrichtung kann weiterhin dazu ausgebildet sein, die erstellten Messwerte bezüglich der Eigenschaften der Probe an einen Benutzer der Messvorrichtung 100 auszugeben. Hierfür kann beispielsweise die Ausgabeeinrichtung 140 der Messvorrichtung 100 verwendet werden. Die Ausgabeeinrichtung 140 kann hierfür beispielsweise einen Bildschirm und/oder Lautsprecher umfassen. Beispielsweise können auch die Ausgabeeinrichtung 140 und die Eingabeeinrichtung 150 in einem Touchscreen zusammengefügt sein. Alternativ oder zusätzlich können auch einzelne Komponenten der Messvorrichtung 100, wie etwa die Eingabeeinrichtung 150 und die Probenaufnahmeeinrichtung 160 hervorgehoben werden, in dem etwa zu betätigende Schaltfelder oder dergleichen beleuchtet werden.

Insbesondere kann die Steuereinrichtung 110 auch dazu ausgebildet sein, die Datenbank 120 nach der Erstellung der Messwerte zu aktualisieren. Die Messergebnisse bezüglich der Materialeigenschaften der bei der Messung verwendeten Probe können dann zum Beispiel in die Datenbank 120 aufgenommen werden und stehen dann für zukünftige Messungen und Messpläne zur Verfügung. Die hierfür nötigen Informationen bezüglich der durchgeführten Messung können entweder von einem Benutzer der Messvorrichtung 100 an die Steuereinrichtung 110 übergeben werden. Alternativ oder zusätzlich kann die Steuereinrichtung 110 die relevanten Informationen auch direkt von der Messvorrichtung 100, insbesondere von der Sensoreinrichtung 130, erhalten.

Die Messvorrichtung 100 kann insbesondere als Vorrichtung für die thermische Analyse von Materialien ausgebildet sein. Insbesondere kann die Messvorrichtung 100 für die Durchführung von Differenz-Thermoanalysen, dynamischer Differenzkalometrie, dynamisch-mechanischer Analysen, thermomechanischer Analysen oder dergleichen ausgebildet sein. Bei derartigen Messvorgängen kann die Unterstützung eines Benutzers durch die Steuereinrichtung 110 besonders vorteilhaft sein.

Fig. 3 zeigt eine schematische Darstellung eines Systems 10 mit einer Vielzahl an Messvorrichtungen 100 nach einem Ausführungsbeispiel der vorliegenden Erfindung.

Das System 10 umfasst im gezeigten Ausführungsbeispiel insgesamt zwei Messvorrichtungen 100, eine Steuereinrichtung 200 sowie eine Datenbank 300.

Die einzelnen Komponenten des Systems 10 können prinzipiell genauso ausgebildet sein, wie die mit Bezug auf Figur 2 beschriebenen entsprechenden Komponenten. Lediglich die Steuereinrichtung 200 und die Datenbank 300 sind in dem hier gezeigten Ausführungsbeispiel extern von den beiden Messvorrichtungen 100 als eigenständige Geräte ausgebildet. Prinzipiell kann die Datenbank 300 jedoch auch als Unterkomponente der Steuereinrichtung 200 ausgebildet sein.

Da die Steuereinrichtung 200 als eigenständige Vorrichtung ausgebildet ist, kann sie für die Verwendung mit jeder der beiden Messvorrichtungen 100 ausgebildet sein. Dies ermöglicht beispielsweise auch, dass eine zu untersuchende Probe zunächst mittels einer der Messvorrichtungen 100 untersucht und im Anschluss vollständig autonom von einer anderen Messvorrichtung 100 untersucht wird. Hierfür können entsprechende, nicht gezeigte, Transportmittel vorgesehen sein.

In Fig. 3 sind zwei Messvorrichtungen 100 gezeigt. Es kann allerdings eine beliebige Anzahl an Messvorrichtungen 100 vorgesehen sein. Insbesondere kann auch vorgesehen sein, eine einzelne Messvorrichtung 100 mit einer externen Steuereinrichtung 200 und/oder einer externen Datenbank 300 zu verwenden.

Die Messvorrichtungen 100 können funktionsgleich ausgebildet sein oder für die Durchführung jeweils unterschiedlicher Messungen ausgebildet sein. Dies erlaubt je nach Anwendungsbereich die zeitgleiche oder sequentielle Durchführung der jeweiligen Messvorgänge.

Die Datenbank 300 wird hier als spezifischer Bestandteil des Systems 10 gezeigt. Es ist jedoch auch denkbar, dass die Steuereinrichtung 200 und/oder die Datenbank 300 mit einem erweiterten Netzwerk, insbesondere mit dem Internet, verbunden ist und relevante Informationen direkt über dieses Netzwerk bezieht anstatt sie lokal abzuspeichern.

### BEZUGSZEICHENLISTE

- 10: System
- 100: Messvorrichtung
- 110: Steuereinrichtung
- 120: Datenbank
- 130: Sensoreinrichtung
- 140: Ausgabeeinrichtung
- 150: Eingabeeinrichtung
- 160: Probenaufnahmeeinrichtung
- 200: Steuereinrichtung
- 300: Datenbank
- M: Verfahren
- M1: Verfahrensschritt
- M2: Verfahrensschritt
- M3: Verfahrensschritt

## Patentansprüche

1. Verfahren (M) zur Steuerung einer Messvorrichtung (100) mit folgenden Verfahrensschritten:
Auswählen (M1) einer zu untersuchenden Probe;
Herstellen (M2) von Bedingungen, unter welchen die Probe untersucht werden soll, durch die Messvorrichtung (100); und
Erstellen (M3) von Messwerten bezüglich Eigenschaften der Probe;
wobei die Verfahrensschritte von einer Steuereinrichtung (110; 200) autonom gesteuert werden.

2. Verfahren (M) nach Anspruch 1, wobei die Steuereinrichtung (110; 200) autonom die zu untersuchende Probe auswählt.

3. Verfahren (M) nach Anspruch 2, wobei die Steuereinrichtung (110; 200) die zu untersuchende Probe auf Basis von zu einem früheren Zeitpunkt durch die Messvorrichtung (100) hergestellten Bedingungen auswählt.

4. Verfahren (M) nach einem der Ansprüche 2 oder 3, wobei die Steuereinrichtung (110; 200) die zu untersuchende Probe auf Basis von zu einem früheren Zeitpunkt durch die Messvorrichtung (100) erstellten Messwerten auswählt.

5. Verfahren (M) nach einem der vorhergehenden Ansprüche, weiterhin umfassend ein Wiederholen des Erstellens der Messwerte, wenn die Steuereinrichtung (110; 200) erkennt, dass die erstellten Messwerte außerhalb eines plausiblen Bereichs liegen.

6. Verfahren (M) nach einem der vorhergehenden Ansprüche, wobei die Steuereinrichtung (110; 200) auf eine Datenbank (120; 300) zurückgreift.

7. Verfahren (M) nach Anspruch 6, wobei die Datenbank (120; 300) eine Vielzahl an Informationen über Materialeigenschaften und Messmethoden beinhaltet, und wobei die Steuereinrichtung (110; 200) basierend auf dieser Vielzahl an Informationen autonom Messvorrichtung (100) steuert.

8. Verfahren (M) nach einem der Ansprüche 6 oder 7, wobei die Steuereinrichtung (110; 200) die Datenbank (120; 300) nach dem Erstellen der Messwerte aktualisiert.

9. Messvorrichtung (100), welche dazu ausgebildet ist, ein Verfahren (M) nach einem der Ansprüche 1 bis 8 durchzuführen.
